# EUROPEAN PATENT APPLICATION

(11) **EP 3 584 182 A1**
(43) Date of publication of application: **25.12.2019**
(21) Application number: 19187540.0
(22) Date of filing: 11.08.2015
(51) Int. Cl.: B65B 61/02, G06K 19/08, B31F 1/07, G06K 1/12

(54) **METHOD FOR THE AUTHENTICATION OF IDENTIFICATION MARKS ON A PACKAGING FOIL, EMBOSSING DEVICE , PACKAGING FOIL**

(30) Priority: 12.09.2014 CH 13872014
(62) Divisional of application: 15180608.0
(71) Applicant: Boegli-Gravures SA, CH-2074 Marin-Epagnier (CH)
(72) Inventor: BOEGLI, Charles, 2074 Marin-Epagnier (CH); DROZ, Alain, 2075 Thielle (CH); STEFFEN, Werner, 6371 Stans (CH)
(74) Representative: Weihs, Bruno Konrad

(57) **Abstract**

In the method for the authentication of identification marks applied on a packaging foil, the identification marks, present as a barcode, are embossed on-line by an embossing roller device on a packaging foil, are read by means of a suitable apparatus and are compared to a template for the creating of the barcode, wherein the structural elements of the bar code, created by means of the template, are transferred to a set of embossing rollers with male and female rollers associated with one another and are formed on the surface thereof. Preferably, a further code is overlaid on the barcode in a further coding step, and the result is transferred and formed as a template onto the surface of the set of embossing rollers, wherein the template is used for deciphering the read-in, embossed code.

The embossing device for the embossing of barcode onto a packaging foil (12) according to the method has a set of embossing rollers with male rollers (P5) and female rollers (M5) associated with one another, wherein the structural elements (STP, STM) of the barcode (7BCP, 7BCM) created by means of the template are arranged on the surface thereof.

Such a method and such a device permit the embossing of particularly secure, comprehensive and compact identification marks on cardstock-type cigarette packages (12) or on inner liners (13A, 13B).

## Description

The present invention relates to a method and a device for the authentication of identification marks applied onto a packaging foil, wherein the identification marks are present as a barcode, according to the introductory clause of Claim 1, to an embossing device for carrying out the method and to a packaging foil produced according to the method.

A very large number of methods exist for the authentication of a plurality of identification marks on the most varied of goods and their packagings. The present invention relates to a method for the authentication of goods, such as e.g. foodstuffs, electronic equipment and in particular smokers' products such as cigarettes or cigars, which are arranged in a packaging. In EP 1 867 470 B1 of the same applicant, a method and a device are disclosed for the authentication of identification marks embossed onto a packaging foil, wherein on the one hand in addition to the embossing of identification marks, such a foil, in particular such a so-called inner liner used in the tobacco industry, is satined and an array of identification marks is embossed online as a pattern and read with an apparatus suitable for this and compared to a template by means of an image processing method.

The method which is thus defined is used successfully for the authentication of packaging foils which generally have a thickness of 30 to 70 µm and are used e.g. as so-called inner liners, i.e. as packaging foils which are enclosed around a number of cigarettes and these enclosed cigarettes are arranged in a cigarette packet made of cardboard. In this method, the identification marks, generally punctiform elements, are transferred according to a particular template onto the embossing rollers and the foils which are embossed therewith are decoded by means of the same template. Optical reading methods and suitable encoding algorithms are used here.

In the period between the first application of the EP 1 867 470 B1 mentioned in the introduction and the present invention, important changes have been carried out or respectively prescribed both with regard to the arrangement of identification marks, i.e. of codings on the one hand and with regard to packaging materials on the other hand. With regard to the identification marks for the authentication of objects, in recent times barcodes in the simple, one-dimensional form as in the case of foodstuffs in supermarkets and resulting therefrom so-called QR codes i.e. "Quick Response" codes have become established, which in particular can also be read and evaluated by a smartphone. Hereinbelow, the term "barcode" is used for all types of such codes, i.e. e.g. for simple barcodes, for QR codes and for matrix codes, or further similar codes.

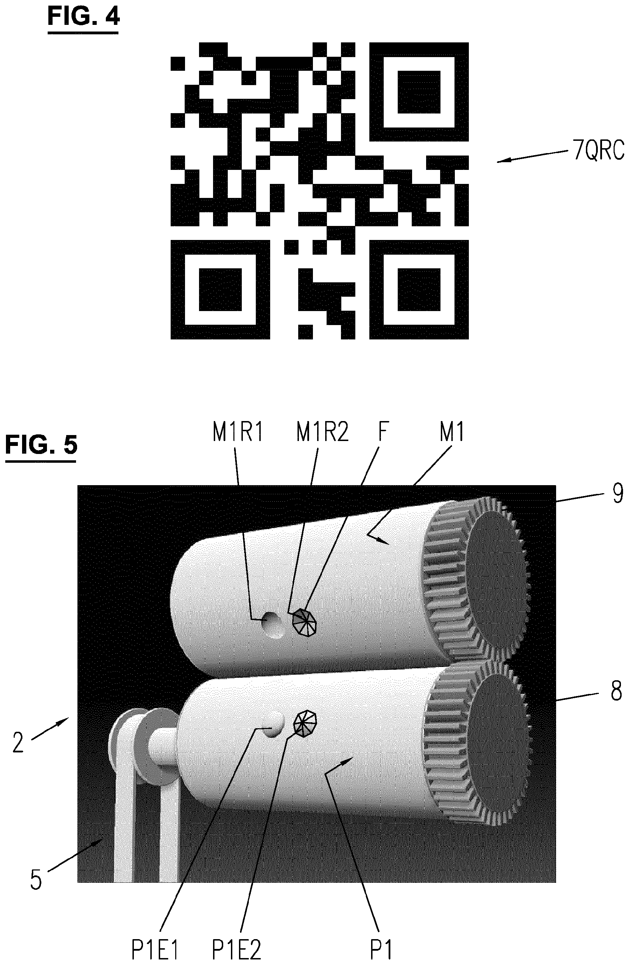

For example, a so-called QR codes generator can be downloaded from the internet, see Figure 4, with an application method for the use of such codes. There is an increasingly greater number of such barcodes, in particular so-called QR codes and data matrix codes, which are used particularly for advertising and information. The barcodes known hitherto are presented and printed as black-and-white images.

The word QR means that the content of the code can be decoded very quickly after it has been scanned in through a barcode reader or a smartphone or other mobile telephone or else through a webcam. Appropriate apps can be downloaded for the smartphone for the decoding of the codes. As this code is two-dimensional, such a QR code can store very much greater amounts of data and therefore various functions such as spot advertisements, viewing video films, sending SMS or payments can be implemented. This code was publicized by a Japanese firm in 1999 and is subject to an ISO Standard 18004.

A continuous change has also taken place with regard to the packaging material for smokers' products such as cigarettes and cigars. For some time already, packaging foils for the tobacco or food industry have been embossed with embossing roller devices, this concerning in the case of smokers' products the above-mentioned inner liners, which can also serve as packaging material for chocolate, butter or similar foods or electronic components. Parallel to the developments of embossing roller technology, or respectively the production of embossing rollers, a change also took place in the packaging materials, wherein the originally entirely metallic aluminium foils were replaced by paper foils, the surfaces of which, due to environmental considerations, are coated with increasingly thinner metal layers and finally the very thin metal layer was sputtered on. In more recent times and also in the future, the metallization of the inner liners will become even less or these will disappear entirely.

Recently, in addition, efforts are underway to greatly reduce or even eliminate entirely the advertising of smokers' products, so that an embossing of the inner liners with designs which are effective as advertising will no longer be possible to the extent hitherto. Therefore, ways are being increasingly sought to produce new decorative effects without the use of conspicuous embossings, gold edges or suchlike decorations. New ways are also being sought for product identification, which up until now has been ensured primarily in brand names which are maintained worldwide. Today, in addition, e.g. so-called tactile effects are coming into use, which are produced by special surface structures of the foils or by special engravings.

Currently, in most cases, the cigarettes are enclosed by an inner liner and arranged in a folded box. In most cases, the keeping moist and the protection from external influences are assisted by a covering of a plastic film, e.g. a polypropylene film. The inner liner alone can not guarantee the desired functions, e.g. keeping the smokers' products moist and protecting from external odour influences on the one hand and a certain rigidity for the mechanical protection of the cigarettes on the other hand, and the folded box alone can also not do this. Currently, a suitable folded box carton fulfils these requirements. This suitable folded box carton is named here below as a "blank".

In the present application, therefore, reference is also made in particular to such blanks, which can generally have a weight of approximately 100 - 400 g/m² and e.g. a thickness of approximately 300 µm. Here, these blanks are frequently white or, for example, coloured grey and they can be plain, lacquered, printed and/or laminated with an aluminium or plastic foil. If a single covering is concerned, it is absolutely necessary that this covering is not damaged during the embossing and subsequent folding, because otherwise the protective function from foreign odours and dehumidification can no longer be guaranteed.

It is pointed out expressly that the embossing of blanks according to the invention which is described below only represents an example and the invention also applies to other packaging foils such as inner liners, which can also serve as foils for the food industry with a weight in a range of 15 - 400 g/m², a thickness of 15 to 400 µm and which can be made of metallized paper, aluminium paper, printed paper, paper or aluminium, and to other hybrid and layered foils and metal- or plastic-coated foils.

It is known that precisely in the case of tobacco products there are great efforts to counterfeit these, not least in order to bypass the high customs duties and taxes. This means that not only the tobacco industry itself, which of course suffers from this, but also the customs and tax authorities, are interested in establishing whether the cigarette packets arriving onto the market are authentic.

In principle, the use of the above-mentioned two-dimensional barcodes could meet most requirements, but, as has also been mentioned further above, hitherto only printing methods exist in order to apply such codes. The printing of packaging foils, in particular blanks or inner liners for the covering of cigarettes, online in a cigarette packaging plant is, however, in several respects not able to be carried out or only able to be carried out with great difficulty, in order to apply these codes in online production in the requisite quality at the required speed rotatively.

Proceeding from the prior art explained further above, it is an object of the present invention to indicate a method and device for the authentication of identification marks applied on a packaging foil, in which on the one hand the packaging foil which is to be embossed can be a foil with a weight of 15 - 400 g/m², in particular also a so-called blank with a weight of 100 - 400 g/m², and the identification marks can be read by various devices such as smartphones or suchlike, but on the other hand can be applied with very great precision and density onto the packaging foil, in order to offer a greater potential for codifications or for codes which are even more difficult to discover. This problem is solved by the method according to Claim 1 and the device according to Claim 3. Further embodiments and advantageous features are described in the dependent claims.

The invention is explained in further detail below with the aid of drawings of example embodiments.
- Figure 1: shows a roller arrangement according to the prior art for the satining and embossing of identification marks,
- Figure 2: shows diagrammatically a possible arrangement of identification marks according to the prior art,
- Figure 3: shows, greatly enlarged, a cutout of the arrangement of Figure 2,
- Figure 4: shows a barcode in the form of a QR code from the internet,
- Fig. 5: shows a male-female embossing roller arrangement according to the invention,
- Figures 6 - 8: show, diagrammatically, section drawings of embodiments of non-inverse-congruent male and female roller structures,
- Fig. 9: shows a set of embossing rollers with a male and female roller, on the surface of which a greatly enlarged barcode serving as identification mark is arranged,
- Fig. 10: shows a surface of a blank embossed with the set of embossing rollers according to Fig. 9,
- Fig. 11: shows a section of the blank of Fig. 10,
- Fig. 12: shows the rear sides of the blank of Fig. 10,
- Fig. 13: shows an inner liner for the packaging of cigarettes, provided with logos,
- Fig. 14: shows a further inner liner for the packaging of cigarettes in horizontal direction, likewise provided with logos, and
- Fig. 15: shows an embossing device with three embossing rollers.

Packaging foils for the tobacco industry or for the food industry have already been embossed by embossing roller devices for some time, wherein this can concern e.g. so-called inner liners, which are wrapped around a number of cigarettes, or packaging material for chocolate, butter or similar foods, or electronic components. In almost all cases, the concern here is with thin foils of approximately 70 µm thickness.

The so-called inner liners firstly consisted of pure aluminium foils, such as for example household foils, and these were embossed in that they were guided through between two rollers, at least one roller of which had a relief, the so-called logos. Up until approximately 1980, such a pair of rollers consisted for the majority of a steel roller, on which the relief was formed and of a counter-roller of a resilient material, for example rubber, paper or plexiglass. By the impressing of the relief of the male roller into the counter-roller = female roller, the mirror-inverted impression was produced. At least since 1980, embossing rollers with small teeth have become accepted for the embossing and satining of packaging foils, preferably in a pin-up - pin up down constellation, see EP 1 867 470 B1 mentioned in the introduction.

The legislation concerning smokers' products, which is having an increasingly restrictive effect, and the efforts concerning further features such as tactile, acoustic or other optical features on the one hand and the ever greater variety of different types of packaging materials such as aluminium foils, metal-coated papers, tipping papers, hybrid foils, plastic foils, cardboard or cardstock on the other hand lead to the conventional pin up - pin up embossing rollers, in which both the driven roller and also the counter-rollers have a large number of teeth, namely still being able to be used fully and successfully for the embossing of inner liners, but coming up against their limit for the aims indicated above.

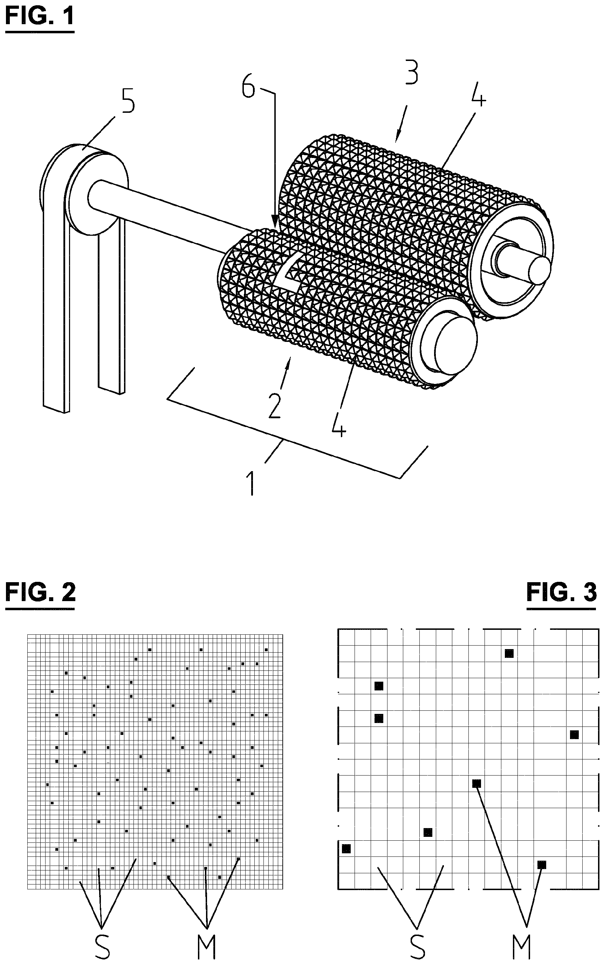

Examples of such embossing devices are described in EP 1 867 470 B1 mentioned in the introduction. Figure 1 shows therefrom a simple form of an embossing device 1 with two embossing rollers 2 and 3 with teeth 4 in the pin-up - pin-up configuration, wherein the embossing roller 2 is driven by a drive 5 and is provided with a logo, e.g. an "L". At this point the corresponding teeth were removed on a roller. In this patent document it is described in addition that the counter roller(s) can also be smooth with elevations, or provided with longitudinal ribs or with rings. The foil is indicated by the number 6.

One of the ideas of the invention specified in this document was to produce by the devices known per se with modified individual teeth, rings or longitudinal ribs on embossing rollers or by the arranging of suitable structures on a roller which is smooth per se, a particular arrangement of identification marks which presents an array of points, marks or suchlike, which can be recognized and therefore identified in the authentication process. For this, with individually modified teeth, rings, longitudinal ribs or suitable structures on a roller which is smooth per se, which are modified according to a quite specific pattern, for example a chessboard-like pattern or another repeatable pattern are produced, wherein in this array of points bringing about the satining with respect to the normal, one or more specific geometric zones are singled out, in which the array of identification marks are authenticated.

In Fig. 2 a grid on a foil is drawn diagrammatically, as is produced on satining, i.e. regularly arranged indentations S, which were brought about by the described methods and devices for satining. In addition to this are the identification marks M, differently configured indentations, which were brought about by the impressing of microstructures. Figure 3 shows a cutout enlargement of Fig. 2. The pattern of the identification marks was transferred onto the embossing rollers according to a template.

In a possible example embodiment of this method, the surface of a packaging foil provided with identification marks is captured by a camera, wherein this term "camera" comprises all types of camera, including for example CCD cameras and suchlike. However, the method also permits other image capture methods. In order to carry out a comparison between the template with a particular pattern, e.g. chessboard-like template, and the image captured by the camera, the image processing, based on so-called template matching, is used.

The foil as transmission medium can have defects relating to manufacture and use. In order to nevertheless enable a reliable extraction of the concealed identification marks, these are provided with redundancy, i.e. an additional coding is carried out, adapted to the transmission channel. This redundant coding then permits a reliable extraction of the identification marks during the reading process, which leads to a higher reliability of authentication. Here, the identification marks are extracted by means of a decoding method and are compared with the original information on the template.

The statistical correlation, established through this method, between the marks of the template and those of the embossed identification mark is used as a measure for the similarity between template and embossed pattern and therefore forms the basis for the decision as to authenticity. In practice, it has been found that through the empirical establishing of a minimum level of the processing signal with respect to noise, an authentication can be achieved which is sufficiently reliable for many purposes.

As mentioned in the introduction, work is being carried out increasingly in recent times with barcodes for identification and authentication, wherein for more sophisticated texts and other applications in particular the so-called QR and matrix codes come into consideration, which in contrast to the simple barcodes for supermarkets and suchlike have two-dimensional structures and therefore have a very much greater capacity. Figure 4 is an example of a QR code generator, which can be downloaded from the internet and coded. Owing to their large capacity, such barcodes as QR codes and matrix codes are able to receive authentication marks which are difficult to discover and decipher. This includes the fact that such barcodes, in order to be difficult to discover, are to be as small as possible.

Until now, it is only known that such codes are printed in black-and-white onto a substrate, and because such a printing method is not suitable for the packaging plants of smokers' products, which operate at high speed, it is one of the ideas of the invention to emboss such barcodes onto a packaging foil, which can be a blank. It can be seen from the structure of such a code that such a code can no longer be embossed by embossing rollers with teeth, because as fine a structure and extent as possible is to be aimed for.

Apart from the embossing rollers with teeth, rollers are also known which operate according to the male-female system. Known roller systems with a male roller with male structures and a female roller with female structures inverse-congruent thereto can indeed extend the range of decorative elements, but due to the manufacturing and sorting in pairs are very cost-intensive and in particular time-consuming to produce, so that their production for an industrial embossing for the tobacco industry is little used until now.

Furthermore, a fine embossing can only be guaranteed with a very great expenditure in the production of such rollers. In addition to this is the fact that in this case, with the use of a male roller and an inverse-congruent female roller, the foil lying therebetween is squeezed during embossing such that tensions occur in the transverse direction which are unacceptable for tobacco product papers. Furthermore, a boundary to the hole formation occurs which is very difficult to control and very high pressures are necessary for a high speed online process, wherein the embossing times lie in the millisecond range. Finally, there is a tendency to use thicker papers up to 300 µm and more.

In patent application PCT/EP2013/056144 of the same applicant, to solve the general problem of indicating a method for the manufacturing of a set of embossing rollers, by which it is possible to carry out fine embossings for the most varied of described surface structures of the indicated materials of the most varied type in online operation of a packaging plant, it is proposed that in a male-female embossing roller system the female surface structure is produced independently of a previously produced or physically already existing male surface structure. In the not previously published EP application No. 13 181 978.1 the above method is expanded, in order to also be able to emboss the smallest structures with an even greater precision.

Fig. 5 shows from the above-mentioned application to explain the principle diagrammatically and in a simplified manner a structure of an embossing device 1 with a male roller P1 and a female roller M1, wherein the male roller is driven by a drive 5. The male roller P1 has two elevations P1E1 and P1E2 which are different from one another, and the female roller M1 has depressions M1R1 and M1R2 associated with the elevations of the male roller. The two rollers are connected with one another via a fine gear 8 and 9.

As the structures of the female rollers are produced independently of the structures of the male rollers, the female depressions are not precisely inverse-congruent to the associated male elevations. As is further stated, the deviations can comprise both height or depth dimensions and also angles. The elevation P1E1 and the associated depression M1R1 are hemispherical and the elevation P1E2 and the associated depression M1R2 are structured.

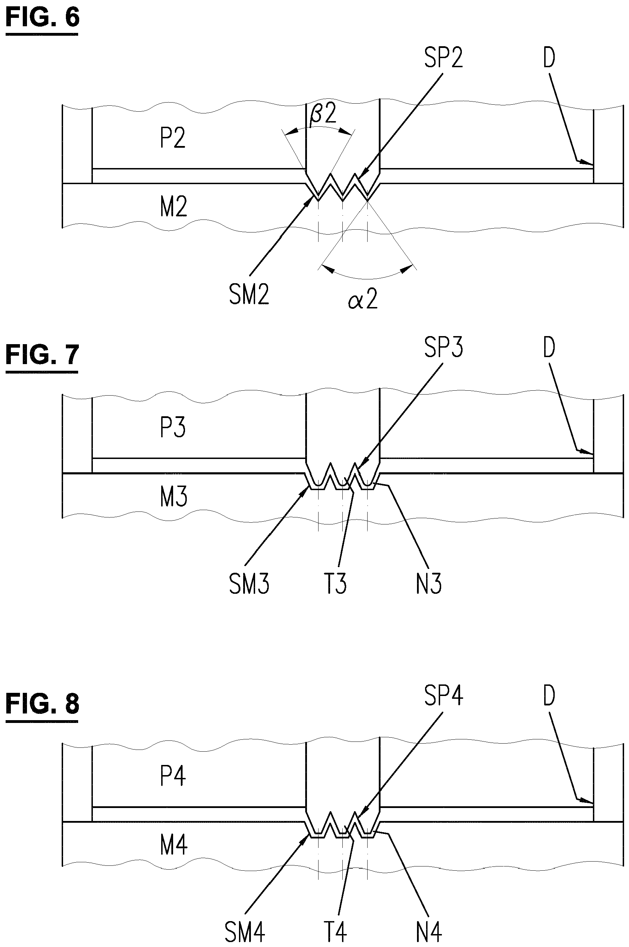

Proceeding therefrom, in Fig. 6 - 8 some possibilities are illustrated diagrammatically as to how the female structure can deviate from the male structure. For better illustration and demonstration, the surface structures are illustrated in tooth form and enlarged, in order to be able to make the deviations better visible.

In order to be able to indicate the desired deviations, firstly the systematic errors, i.e. the tolerances in production must be defined. As already mentioned, the improvements in the roller production aim inter alia to produce more precise and suitable structures for the fine embossing and therefore the problem occurs of achieving close tolerances during manufacture. These tolerances are also influenced inter alia by the quality of the surface of the rollers, and it is therefore advantageous to use a hard surface.

The concern here can be with solid carbide rollers or metal rollers with a surface of hard metal, hardened steel or hard material such as ta-C, tungsten carbide (WC), boron carbide (B₄C) or silicon carbide (SiC), all-ceramic rollers or metal rollers with a ceramic surface. These are all materials which are suitable in particular for fine processing, for example also by means of a laser engraving system, see in this respect for example EP 2 513 687 A1 of the same applicant. In most cases, it is advantageous to provide the surface of the embossing rollers with a suitable protective layer. Both embossing rollers have roller bodies which are reinforced against deformation, with a hard surface region, so that the surface geometry is also preserved in the case of high stresses.

For example, for an embossing roller with a length of 150 mm and a diameter of 70 mm and with the intended fine processing in rotation direction an error of 2 - 4 µm and in axial direction one of +/- 2 µm is aimed for and in height, with a structural element height of 0.1 mm, one of 0.5 to 3 µm. With an angle of two opposite tooth flanks of e.g. 80°, an angle error of below 3° is aimed for. Resulting from this for new rollers is a maximum linear error of +/- 5 µm, so that the deviations due to manufacture can be approximately up to 10 µm.

As, however, these values are greatly influenced by the measurements and the manufacture, for relatively thin foils of 70 µm one can only speak in terms of a desired difference starting from a linear deviation of the male structures from the female structures of 15 µm and more in axial and radial direction and of an angle deviation of up to 20° for the overall angle. The upper limit of the difference of the structures is set by the condition that the two rollers can operate with one another in an unimpaired manner.

The desired difference of the respectively associated structures on the male part and on the female part depends greatly on the material which is to be embossed. Thus, for example, the linear difference of the distance for the embossing of a foil approximately 30 µm thick is around 40 µm and in the embossing of a cardstock approximately 300 µm thick is around 200 µm.

It is illustrated in Figures 6 - 8 that it is advantageous for certain structures if the rollers have a certain constant distance from one another. For a pin up - pin up roller system, such a constant distance in the form of a lowering of a roller, or respectively of a smaller diameter, at least over the width of the foil, by 0.02 to 0.7 mm, is described in WO 2011/161002 A1 of the same applicant.

In the cases according to Figures 6 - 8, the diameter of one of the rollers, advantageously the male roller, is provided to be smaller over at least the width of the foil by an amount of over 0.02 mm than the remainder of the roller. Thereby, a more uniform embossing can be produced. For the embossing of a blank of 250 µm, a lowering is advantageous. In Figures 6 - 8 such a lowering or respectively the difference of the diameters of the male roller is designated by a 'D'. Instead of a lowering, other spacer means can also be provided, e.g. an electronic or mechanical distance control.

In Fig. 6 the female roller M2 has a surface structure SM2, wherein two opposite flanks of the depressions have an angle α2. The male roller P2 has a structure SP2, wherein two opposite flanks of the teeth enclose an angle β2 and β2 is smaller than α2. The angles can have an amount of 10° to 110° and difference of up to 20°.

The female roller M3 in Fig. 7 has a female structure SM3, the grooves N3 of which have a flat groove surface. The male part P3 has a surface structure SP3, the teeth T3 of which are rounded.

The female roller M4 of Fig. 8 has the same surface structure SM4 as previously, whilst the teeth T4 of male roller P4 are flattened at the tip.

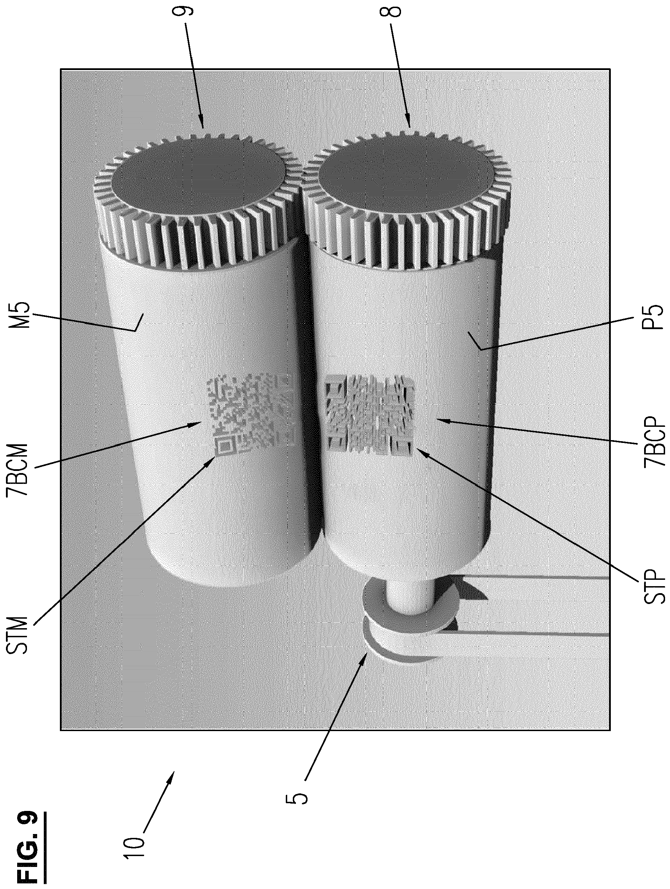

Figure 9 shows an embossing device 10 according to the invention, which has a male roller P5 and a female roller M5. The two rollers have a structure P5E5 and M5R5, associated respectively with one another, in the form of a barcode 7BCP and 7BCM. The individual structural elements are designed by STP or respectively STM. The representation of the barcode of the data matrix type is greatly enlarged here. In order to make the finding of such a code difficult, in this example the dimension is reduced to 4 x 4 mm.

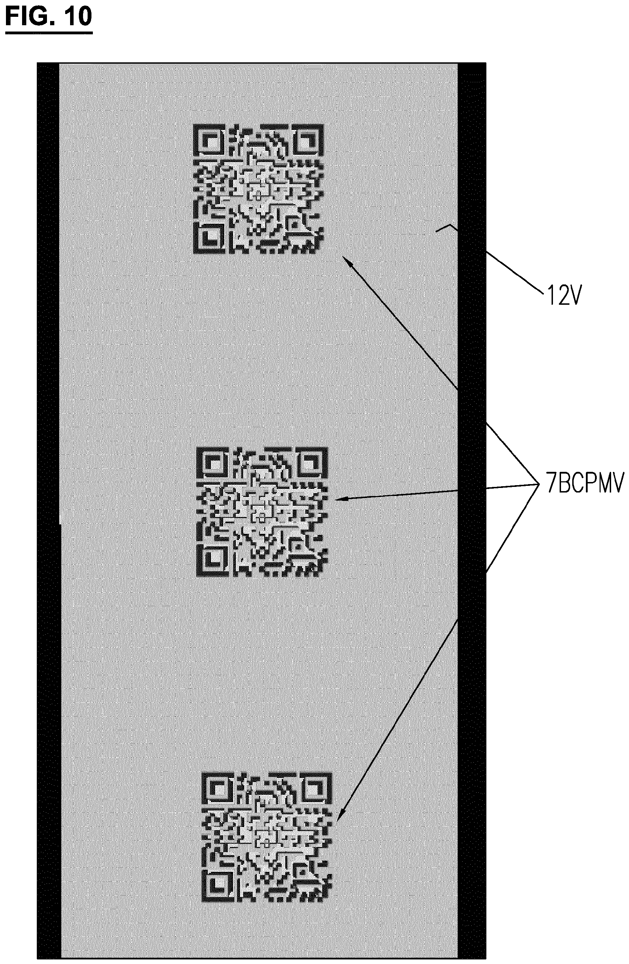

Figure 10 shows a packaging foil 12, resulting from a blank, for the packaging of cigarettes, before the folding, separating and bending, on which the code 7BCPM is arranged, which has been produced by the two embossing rollers P5 and M5. Here, the barcode is also illustrated with a great enlargement.

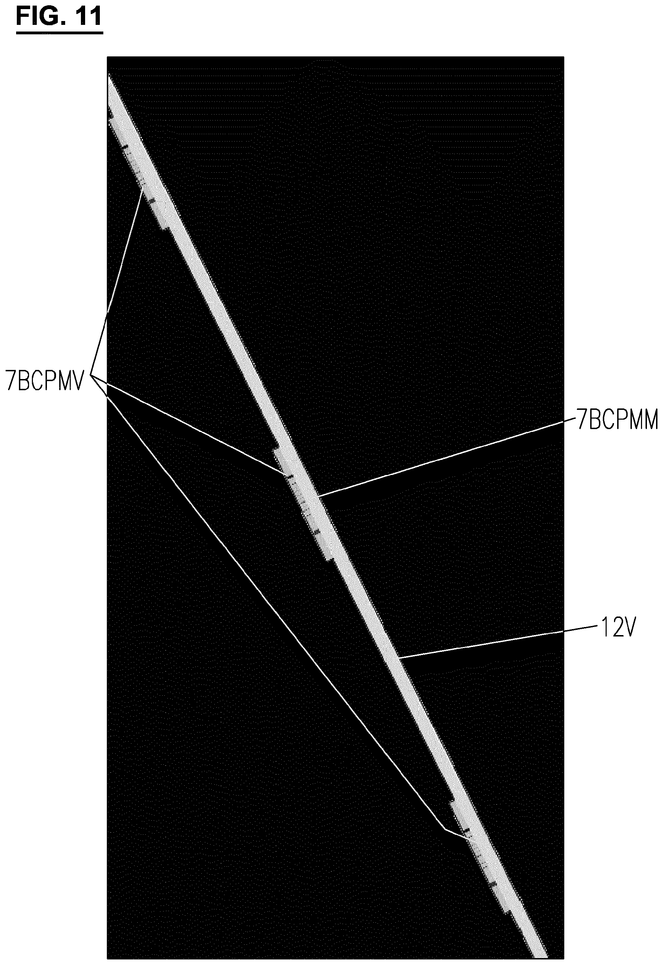

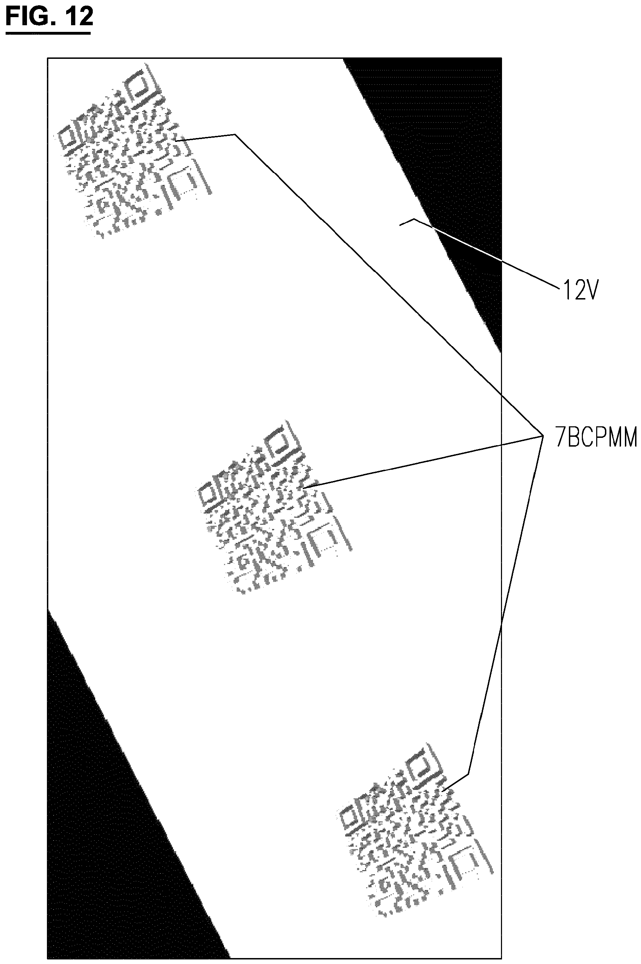

Figure 11 shows the same foil 12 in a section, wherein the thickness is approximately 3/10 mm. In this figure, the front side is arranged on the left and the rear side according to Figure 12 is accordingly arranged on the right.

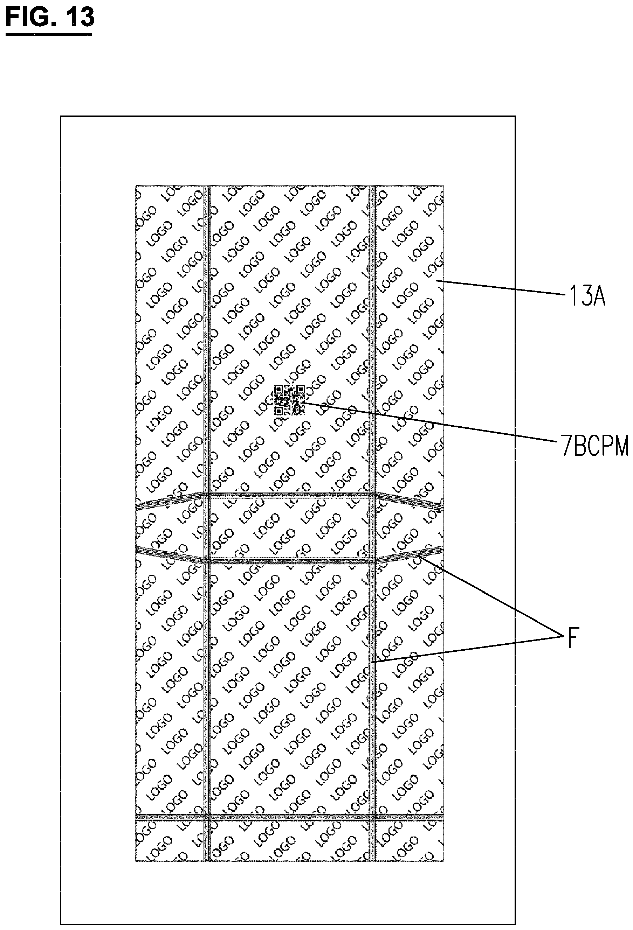

Figure 13 shows an inner liner 13A for use in a cigarette packaging plant, wherein in addition to the barcode and the logos, fold lines F are embossed by the embossing rollers. In addition, it can be seen from Figure 13 that the packaging foil 12, 13A, 13B can contain further logos, logo being understood to mean any marks, images, texts and suchlike which were e.g. already printed on the packaging foil or are also embossed according to the mentioned, not previously published EP application No. 13 181 978.1. Here, the rollers can be provided with logos according to Figure 9. The barcodes can contain only information regarding authentication, or a logo, or both.

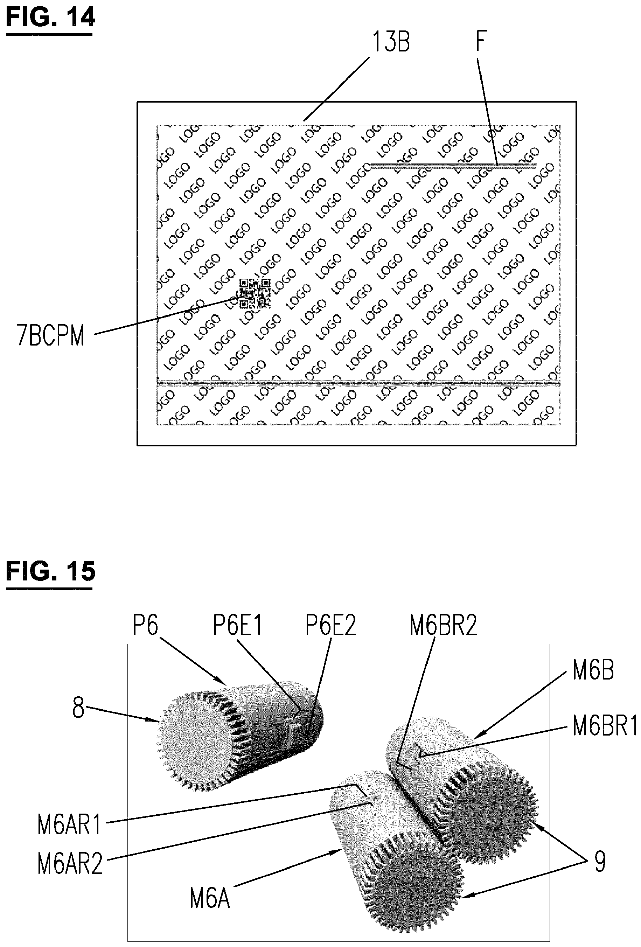

Figure 14 shows a further inner liner 13B for another cigarette packaging plant, likewise provided with logos and fold lines F.

In Fig. 15 it is illustrated diagrammatically that not only embossing devices with two embossing rollers, but for a range of applications expediently embossing devices with a set of embossing rollers with three embossing rollers can be advantageous. Here, two female rollers can be associated with one male roller or two male rollers can be associated with one female roller. Theoretically, it is also conceivable to use a set of embossing rollers with more than three embossing rollers.

In Fig. 13 the structures are illustrated in simplified form for the sake of good clarity, and the male roller P6 has two rectangles P8E1 and E2 arranged over one another, and the female rollers M6A and M6B have associated depressions M6AR1 and R2, M6BR1 and R2, wherein the depressions M6AR1 and R2 have a smaller depth than the depressions M6BR1 and R2. As indicated in Fig. 13, the three rollers work together in a three-roller system, wherein the elevations P6E1, E2 are arranged on the male roller such that respectively a pair of elevations work together with the associated depressions on the first female roller and the second pair of elevations work together with the associated depressions of the second female roller, wherein the depressions M6AR1, R2 are less deep than the depressions M6BR1, R2.

It is also possible that respectively the male part in a two-roller system firstly works together with the one female roller and then in a second roller system works together with the other female roller, wherein respectively the male roller P6 firstly works together with the female roller M6A and then the same male roller P6 works together with the other female roller M6B. This permits an embossing of raised or deep figures, without stressing the foil excessively. Here, in particular, a tearing of the foil at the sites of the lower female part depressions can be prevented. It is also possible to use embossing devices arranged in series, with two or more embossing rollers, in order to achieve a gentler embossing.

With such roller arrangements it is possible to emboss complex codes on a small area, e.g. of the QR code or data matrix code type, and in particular encrypted codes, as are described in the literature, e.g. "Encryption in QR-Codes using Stegnography" published in "International Journal of Engineering Research and Applications" ISSN: 2248-9622, Vol. 3, Issue 4, July/August 2013, pages 1738 - 1741. It is presented there how such QR codes can be used in cryptography. Here, such a code is described as a two-dimensional barcode, which has a substantially higher capacity and therefore guarantees authentication processes with a very high degree of security and additional information. This increased security and possibility for application is produced by means of cryptography through overlaying the simpler QR code with e.g. a logo and further elements. This method is only one of many, in order to overlay a second code on the first QR code or matrix code, e.g. by micro- or macrostructures.

Thus, for example, a second code can be overlaid on a barcode with a logo, which can be read by a smartphone or suchlike and decoded, which second code can only be decoded by means of the encoding code with the algorithm appropriate for this. Thereby, reading by means of a smartphone is made difficult and therefore a very high degree of security can be guaranteed.

It is evident that a reduction of the dimensions brings a substantial increase to the amount of data available, but limits are set on the embossing rollers with regard to the production of such codes by means of mechanical apparatus such as millers. Currently, it is possible to emboss and read QR codes with a dimension of 8 x 8 mm and data matrix codes with a dimension of 4 x 4 mm. With a further desired reduction of these dimensions and therefore also those of their structural elements, it is necessary to use a laser engraving system for the production thereof on the embossing rollers, as is indicated e.g. in the named EP 2 513 687 A1. In connection with the method according to the invention, it is important that the barcode which is to be used is transferred onto the embossing rollers such that the embossed packaging foil can be read correctly.

The standard barcode readers are set to black-and-white codes, so that smartphones or webcams and suchlike can read these. In the case of packaging foils, e.g. of grey or white cardstock, the reading or respectively scanning in is substantially more difficult, because in this case the surface condition or respectively the different reflection of the light through the depressions plays a great part. These different reflections are noticed as noise during decoding. Furthermore, the paper fibres and the type and extent of contamination play a part in the reflection behaviour.

Tests with a smartphone have shown that it is possible to produce, emboss, read in and decode an embossed barcode of the QR type with a size of 8 x 8 mm or of the data matrix type with a size of 4 x 4 mm. In the case of complex codes and difficult reflection conditions and smaller dimensions, however, it can be necessary to use a scanner on the basis of white light interferometry. This is also the case in particular if the barcode is read through the covering foil made of transparent plastic.

With the use of a laser engraving system, as disclosed further above, it is possible in addition to provide regions of the structural elements with microstructures, for example with interference grids, which produce colours on the embossed medium through interference. Through such a laser engraving system, it is possible in addition to produce any other micro- or nanostructures or other complex structures on structural elements, in order to thereby produce further coding possibilities.

## Claims

1. A method for the production of identification marks applied on a packaging foil, wherein the identification marks are present as a barcode, the barcode comprising structural elements, created by means of a template
wherein
the structural elements are transferred to a set of embossing rollers with at least one male roller and at least one female roller associated with one another, by being formed on surfaces of the male and female rollers, whereby female depressions are not precisely inverse-congruent to the associated male elevations;
the identification marks are embossed on-line on the packaging foil by means of the set of embossing rollers.

2. The method according to Claim 1, **characterized in that** in a further coding step, a second code is overlaid on a barcode and the result serves as a template and is transferred and formed onto the surface of the set of embossing rollers.

3. The method according to one of the preceding claims, wherein the barcode comprises micro- or nanostructures or interference grids are arranged on structural elements of the barcode.

4. An authentication method to authenticate identification marks applied on a packaging foil using the method as defined in one of the preceding claims, the authentication method comprising the steps of reading identification marks by means of a suitable apparatus, and comparing the read identification marks to the template for the creating of the barcode.

5. The method according to the preceding claim, wherein the suitable apparatus to read the identification marks is a smartphone or a scanner.

6. A device for embossing identification marks onto a packaging foil (12, 13A, 13B), wherein the identification marks are present as a barcode, the barcode comprising structural elements created by means of a template, **characterized in that** the device has a set of embossing rollers with at least one male roller (P5, P6) and at least one female roller (M5, M6) associated with one another, wherein the structural elements (STP/M) of the barcode (7BCP/M) created by means of the template are arranged on the surface thereof, and the structural elements formed on the surfaces of the male and female rollers, comprise female depressions which are not precisely inverse-congruent to the associated male elevations.

7. The device according to Claim 6, **characterized in that** the packaging foil (12, 13A, 13B) has a thickness of 15 to 400 µm and a weight of 15 to 400 g/m², wherein the packaging foil can be an inner liner of metallized paper, aluminium paper, printed paper, paper or aluminium, or a hybrid, layered and metal- or plastic-coated foil or a folded box carton, which can be plain, lacquered, printed and/or laminated with an aluminium foil or with a plastic foil and can have a weight of 100 - 400 g/m².

8. The device according to Claim 6 or 7, **characterized in that** the structural elements (STM) on the surface of the female roller(s) (M5,6), which are associated with the structural elements (STP) on the surface of the male roller(s) (P5,6), are not inverse-congruent by an amount of above 15 µm in axial and radial direction.

9. The device according to one of Claims 6 to 8, **characterized in that** it has a male roller (P6) and two female rollers (M6A, M6B), wherein the device contains means so that the male roller (P6) with the male elevations (P6E1, E2) firstly interacts with the first female roller (M6A) with the associated female depressions (M6AR1,2) then with the second female roller (M6B) with the associated female depressions (M6BR1,2).

10. The device according to one of Claims 6 to 8, **characterized in that** the embossing device has one female roller and two male rollers, wherein the device contains means so that the female roller with the depression firstly interacts with the first male roller with the associated male part elevation then with the second male roller with the associated male part elevation.

11. The device according to Claim 9, **characterized in that** the male rollers (P6) and the female rollers (M6A, N6B) are arranged in a three-roller embossing device, wherein the elevations (P6E1,2) are arranged on the male roller such that during the embossing method they interact in series with the depressions (M6AR1,2) of the first female roller (M6A) and with the depressions (M6BR1,2) of the second female roller (M6B).

12. The device according to Claim 9, **characterized in that** the male roller (P6) and the female rollers (M6A, M6B) are each arranged in pairs in a two-roller embossing device.

13. The device according to one of Claims 6 to 12, **characterized in that** the diameter of one of the embossing rollers is produced at least over the width of the web of the packaging material with a diameter smaller by an amount (D) than the remainder of the embossing roller, wherein (D) has a value of over 0.02 mm.

14. The device according to one of Claims 6 to 13, **characterized in that** at least the surface of the embossing rollers consists of metal, hard metal, hard material or ceramic, wherein the surface is provided, if applicable, with a protective layer.

15. The device according to one of Claims 6 to 14, **characterized in that** micro- or nanostructures or interference grids are arranged on structural elements of the barcode.

16. The device according to one of Claims 6 to 15, **characterized in that** the embossing rollers have logos in addition to the barcode(s).

17. A packaging foil, such as a blank or an inner liner, produced according to the method of one of Claims 1 to 3, which can be plain, lacquered, printed and/or laminated with an aluminium- or plastic foil and has a weight of 15 - 400 g/m² and has a grey or white surface, wherein the embossed structural elements (7) of the barcode are formed 3-dimensionally in the manner of a relief on the surface of the foil.

18. The packaging foil according to Claim 17, **characterized in that** it has additionally embossed colour patterns and/or logos produced by interference.

19. A product comprising a foil as defined in one of the preceding claims 17 or 18, wherein said product is a packaging.

20. The product as defined in the preceding claims, wherein said product is a packaging for cigarettes or cigars or similar products.
